# EUROPEAN PATENT APPLICATION

(11) **EP 4 819 439 A1**
(43) Date of publication of application: **07.10.2026**
(21) Application number: 26167796.7
(22) Date of filing: 25.03.2026
(51) Int. Cl.: H02J 7/34, B63H 5/00, B60L 58/00

(54) **CHARGE CONTROL DEVICE**

(30) Priority: 04.04.2025 JP 2025062575
(71) Applicant: Suzuki Motor Corporation, Hamamatsu-shi, Shizuoka 432-8611 (JP)
(72) Inventor: HOSODA, Nami, Shizuoka 432-8611 (JP)
(74) Representative: Haseltine Lake Kempner LLP

(57) **Abstract**

A charge control device (7) includes: an AC generator (14); an inverter (15) which can as well act as a rectifier and converts electric power; a first battery (25) connected to the rectifier and charged by the electric power; a capacitor (16) connected in parallel with the first battery to the rectifier and charged by the electric power; a DC-DC converter (18) that converts voltage output from the rectifier from DC to DC; a first switch (19) that switches between connection and disconnection between the inverter and the capacitor; and a control unit (21) configured to: connect the inverter and the capacitor by controlling the first switch when output voltage of the inverter when acting as a rectifier is greater than the voltage of the capacitor during a power generating operation of the AC generator; and disconnect the inverter and the capacitor by controlling the first switch when the inverter and the capacitor are connected and the capacitor is discharging during a power generating operation of the AC generator.

## Description

### TECHNICAL FIELD

The present invention relates to a charge control device for controlling charging of a capacitor or the like.

### BACKGROUND ART

A capacitor such as a lithium ion capacitor or an electric double layer capacitor is sometimes used as a power source for an electric device such as a motor.

An outboard machine in a marine propulsion system described in JP2022-049254A (Patent Literature 1) includes an engine, a starter motor that starts the engine, an alternating current (AC) generator that generates electric power using rotation of a crankshaft of the engine, and a capacitor. In this outboard machine, when the engine is started, the starter motor is driven by electric power supplied from the capacitor. Furthermore, while the engine is running, the electric power generated by the AC generator is converted from AC to DC by a rectifier circuit and then supplied to the capacitor, which is then charged with this electric power.

### CITATION LIST

### PATENT LITERATURE

Patent Literature 1: JP2022-049254A

In the outboard machine of the marine propulsion system described in the above publication, the rectifier circuit connected to the AC generator is connected to the capacitor to charge the capacitor while the engine is running.

The electric power generated by the AC generator decreases as the rotation speed of the engine decreases. Furthermore, output voltage of the rectifier circuit, that is, the voltage applied to the capacitor, decreases as the electric power generated by the AC generator decreases. When the engine is running and the rectifier circuit connected to the AC generator is connected to the capacitor, the rotation speed of the engine decreases, the electric power generated by the AC generator decreases, and as a result, the output voltage of the rectifier circuit decreases, which can cause the capacitor to discharge. Such discharge of the capacitor reduces charging efficiency of the capacitor while the engine is running. Furthermore, when the capacitor is a lithium ion capacitor, there is a concern that the capacitor may be damaged due to over-discharging.

### SUMMARY

The present invention has been made in consideration of the circumstances such as those described above, and an object of the present invention is to provide a charge control device that charges a capacitor using electric power generated by a generator, and that can suppress discharge of the capacitor due to fluctuations in electric power generated by the generator during power generating operation of the generator.

In order to solve the above problems, a charge control device of the present invention includes an AC generator, a rectifier configured to convert electric power generated by the AC generator from AC to DC, a first battery connected to the rectifier and configured to being charged by the electric power supplied from the rectifier, a capacitor connected in parallel with the first battery to the rectifier and configured to being charged by the electric power supplied from the rectifier, a DC-DC converter configured to convert voltage output from the rectifier from DC to DC and configured to apply the converted voltage to the first battery, a first switch configured to switch between connection and disconnection between the rectifier and the capacitor, and a control unit configured to: connect the rectifier and the capacitor by controlling the first switch when output voltage of the rectifier is greater than voltage of the capacitor during a power generating operation of the AC generator; and disconnect the rectifier and the capacitor by controlling the first switch when the rectifier and the capacitor are connected and the capacitor is discharging during a power generating operation of the AC generator.

According to the present invention, it is possible to suppress discharge of the capacitor due to fluctuations in the electric power generated by the generator during a power generating operation of the generator.

### BRIEF DESCRIPTION OF DRAWINGS

FIG. 1 is an explanatory diagram illustrating a marine propulsion system including an example of a charge control device of the present invention.
FIG. 2 is a circuit diagram illustrating a marine propulsion system including the example of the charge control device of the present invention.
FIG. 3 is a flowchart illustrating an engine start process according to the example of the present invention.
FIG. 4 is a flowchart illustrating a charge control process according to the example of the present invention.
FIG. 5 is a flowchart illustrating an engine stop process according to the example of the present invention.

### DESCRIPTION OF EMBODIMENTS

A charge control device according to an embodiment of the present invention includes an AC generator, a rectifier that converts electric power generated by the AC generator from AC to DC, a first battery connected to the rectifier and charged with the electric power supplied from the rectifier, a capacitor connected in parallel with the first battery to the rectifier and charged with the electric power supplied from the rectifier, a DC-DC converter that converts voltage output from the rectifier from DC to DC and applies the converted voltage to the first battery, a first switch that switches between connection and disconnection between the rectifier and the capacitor, and a control unit that controls the first switch.

When output voltage of the rectifier is greater than voltage of the capacitor during power generating operation of the AC generator, the control unit controls the first switch to connect between the rectifier and the capacitor. As a result, the capacitor is charged with the electric power supplied from the rectifier to the capacitor.

Furthermore, when the rectifier and the capacitor are connected and the capacitor is discharging during the power generating operation of the AC generator, the control unit disconnects the rectifier and the capacitor by controlling the first switch. That is, during the power generating operation of the AC generator, in a state where the rectifier and the capacitor are connected, the electric power generated by the AC generator decreases due to a decrease in rotation speed of a power source driving the AC generator, and as a result, when the output voltage of the rectifier decreases, the capacitor may discharge. When the capacitor is discharging while the rectifier and the capacitor are connected, the control unit controls the first switch to disconnect the rectifier and the capacitor. This prevents the capacitor from discharging.

As described above, the charge control device of this embodiment can suppress the discharge of the capacitor due to fluctuations in the electric power generated by the AC generator during the power generating operation of the AC generator. Therefore, it is possible to prevent a decrease in charging efficiency of the capacitor due to the discharge of the capacitor during the power generating operation of the AC generator, and it is possible to increase the charging efficiency of the capacitor. Furthermore, when the capacitor is a lithium ion capacitor, it is possible to prevent damage to the capacitor due to over-discharging of the capacitor.

### Example

Hereinafter, a marine propulsion system including an example of the charge control device of the present invention will be described.

### Marine Propulsion System

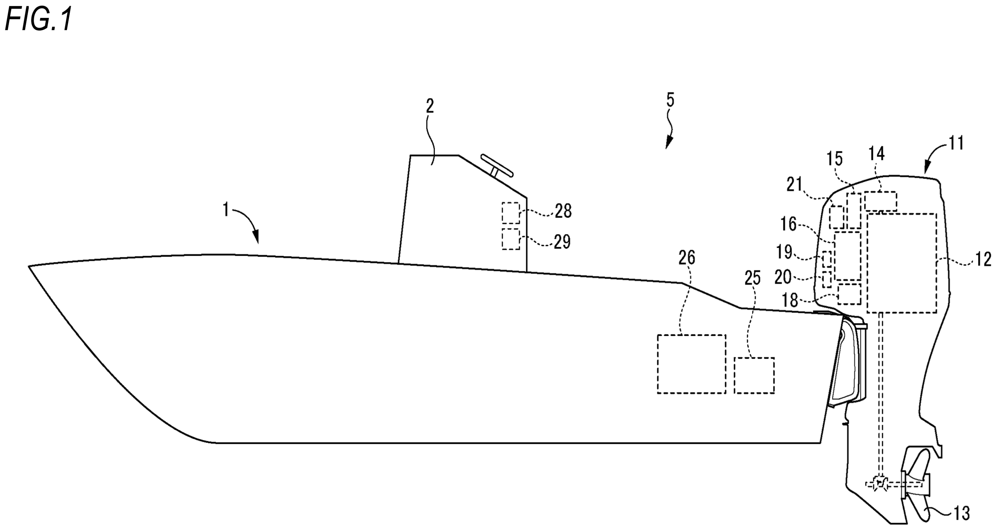

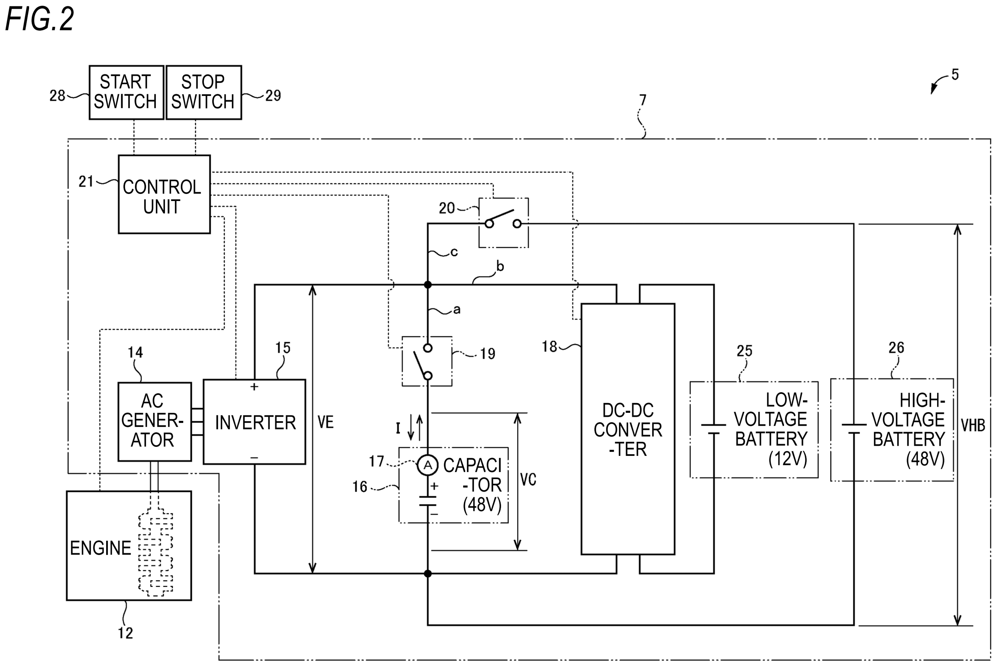

FIG. 1 illustrates a marine propulsion system 5 including the example of the charge control device of the present invention. FIG. 2 illustrates an electrical circuit of the marine propulsion system 5.

In FIG. 1, the marine propulsion system 5 is a system for propelling a boat 1 and is provided on the boat 1. The marine propulsion system 5 includes an outboard machine 11, a low-voltage battery 25, a high-voltage battery 26, a start switch 28, and a stop switch 29.

The outboard machine 11 is a device that generates a propulsive force for the boat 1. The outboard machine 11 is mounted on a transom of the boat 1.

The low-voltage battery 25 is, for example, a lead-acid battery, and its battery voltage is, for example, 12V. The low-voltage battery 25 is provided on the boat 1. The low-voltage battery 25 is used as a low-voltage power source for devices or equipment provided on the boat 1 or the outboard machine 11. The low-voltage battery 25 is a specific example of a "first battery".

The high-voltage battery 26 is, for example, a lithium-ion battery, and its battery voltage is, for example, 48V. The high-voltage battery 26 is provided on the boat 1. The high-voltage battery 26 is used as a high-voltage power source for devices or equipment provided on the boat 1. The high-voltage battery 26 is a specific example of a "second battery".

The start switch 28 is a switch for starting an engine 12 of the outboard machine 11 and is provided in a cockpit 2 of the boat 1. An operator can start the engine 12 of the outboard machine 11 by pressing the start switch 28.

The stop switch 29 is a switch for stopping the engine 12 of the outboard machine 11 and is provided in the cockpit 2 of the boat 1. The operator can stop the engine 12 of the outboard machine 11 by pressing the stop switch 29.

### Outboard Machine

As illustrated in FIG. 1, the outboard machine 11 includes the engine 12, a propeller 13, an AC generator 14, an inverter 15, a capacitor 16, a DC (Direct Current)-DC converter 18, a capacitor relay 19, a high-voltage battery relay 20, and a control unit 21.

The engine 12 is an internal combustion engine and includes a crankshaft provided in a crankcase, pistons provided in cylinders, and intake valves, exhaust valves, and a valve mechanism that are provided in a cylinder head. The engine 12 is also provided with a fuel injection device, an electronically controlled throttle device, an ignition device, and the like.

The propeller 13 rotates by the power of the engine 12 and generates a propulsive force for the boat 1.

The AC generator 14 is an AC generator that is driven by the power of the engine 12 to generate electric power. In this example, the AC generator 14 is a three-phase AC generator. The AC generator 14 also has an Integrated Starter Generator (ISG) structure and functions as a starter motor (three-phase motor) that starts the engine 12. A rotor of the AC generator 14 is connected to a crankshaft of the engine 12. The AC generator 14 is a specific example of an "AC generator".

The inverter 15 is a device that controls the AC generator 14 and has a function as a three-phase inverter. The inverter 15 also functions as a three-phase rectifier circuit. The inverter 15 converts DC power supplied from the capacitor 16 into AC power to generate a three-phase drive current, and supplies the three-phase drive current to the AC generator 14, thereby powering the AC generator 14 (functioning as a three-phase inverter). This allows the AC generator 14 to operate as a starter motor. In addition, the inverter 15 can convert the three-phase AC power generated by the AC generator 14 into DC power and output DC power for charging the capacitor 16, the low-voltage battery 25, and the high-voltage battery 26 (functioning as a three-phase rectifier circuit). The inverter 15 is a specific example of a "rectifier".

The capacitor 16 is a lithium ion capacitor. The capacitor 16 is configured so that inter-terminal voltage when the capacitor 16 is fully charged is approximately 48V. The capacitor 16 is used as a power source when the AC generator 14 is driven as a starter motor.

The DC-DC converter 18 has a function of converting the voltage output from the inverter 15, which operates as a three-phase rectifier circuit, from DC to DC and reducing it to a voltage (e.g., 12 V) appropriate for charging the low-voltage battery 25.

The capacitor relay 19 functions as a switch for switching between connection and disconnection between the inverter 15 and the capacitor 16. The capacitor relay 19 is a specific example of a "first switch".

The high-voltage battery relay 20 functions as a switch that switches between connection and disconnection between the inverter 15 and the high-voltage battery 26. The high-voltage battery relay 20 is a specific example of a "second switch".

The control unit 21 includes a Central Processing Unit (CPU) and the like. The control unit 21 controls the engine 12 by controlling the fuel injection device, the electronically controlled throttle device, the ignition device, and the like. The control unit 21 also controls the inverter 15 to thereby control the AC generator 14. The control unit 21 also controls the capacitor relay 19, the high-voltage battery relay 20, the DC-DC converter 18, and the like. By controlling these devices or equipment, the control unit 21 can control the start and stop of the engine 12 and the charging of the capacitor 16, the low-voltage battery 25, and the high-voltage battery 26. The control unit 21 is a specific example of a "control unit".

### Charge Control Device

The marine propulsion system 5 includes a charge control device 7 (see FIG. 2) according to the example of the present invention. The charge control device 7 controls the charging of the capacitor 16, the low-voltage battery 25, and the high-voltage battery 26. The charge control device 7 of the example of the present invention is composed of the AC generator 14, the inverter 15, the capacitor 16, the DC-DC converter 18, the capacitor relay 19, the high-voltage battery relay 20, the control unit 21, the low-voltage battery 25, the high-voltage battery 26, as well as a current sensor 17 and various voltage sensors described below in the marine propulsion system 5.

### Electrical Configuration of Marine Propulsion System

The marine propulsion system 5 has an electrical configuration as illustrated in FIG. 2. That is, in FIG. 2, the AC generator 14 is connected to an output side (input side of the inverter 15 when the inverter 15 operates as a three-phase rectifier circuit) of the inverter 15 when the inverter 15 operates as a three-phase inverter.

In addition, three power supply paths a, b, and c are connected in parallel to the input side (the output side of the inverter 15 when the inverter 15 is operating as a three-phase rectifier circuit) of the inverter 15 when the inverter 15 is operating as a three-phase inverter. The capacitor 16 is connected to the path a, the low-voltage battery 25 is connected to the path b, and the high-voltage battery 26 is connected to the path c.

The capacitor relay 19 that switches between connection and disconnection between the inverter 15 and the capacitor 16 is connected to the path a. Also, the DC-DC converter 18 that steps down the voltage output from the inverter 15 operating as a three-phase rectifier circuit is connected to the path b. In addition, the high-voltage battery relay 20 that switches between connection and disconnection between the inverter 15 and a positive terminal of the high-voltage battery 26 is connected to the path c.

The control unit 21 is also connected to the inverter 15, the capacitor relay 19, the high-voltage battery relay 20, and the DC-DC converter 18 via signal transmission paths. Although not illustrated in detail, the control unit 21 is connected to the fuel injection device, the electronically controlled throttle device, and the ignition device provided in the engine 12 via signal transmission paths. The control unit 21 can control the devices or equipment by outputting control signals to the devices or equipment connected to the control unit 21 via signal transmission paths.

The start switch 28 and the stop switch 29 are also connected to the control unit 21 via signal transmission paths. When the operator presses the start switch 28, a signal indicating that the start switch 28 is pressed is output from the start switch 28 to the control unit 21. Based on this signal, the control unit 21 can recognize that the start switch 28 is pressed. Similarly, the control unit 21 can recognize when the operator presses the stop switch 29.

In addition, the capacitor 16 is provided with the current sensor 17 that detects a current I flowing into or out of the capacitor 16. For example, when current is flowing into the capacitor 16, that is, when the capacitor 16 is charging, a value of current I is positive. On the other hand, when current flows out of the capacitor 16, that is, when the capacitor 16 is discharging, a value of the current I becomes negative. The current sensor 17 is connected to the control unit 21 via a signal transmission path. The current sensor 17 outputs a detection signal indicating the value or polarity of the current I to the control unit 21. Based on this detection signal, the control unit 21 can recognize whether the capacitor 16 is discharging.

Although not illustrated, the inverter 15 is provided with a voltage sensor that detects output voltage VE of the inverter 15. The capacitor 16 is also provided with a voltage sensor that detects voltage (inter-terminal voltage) VC of the capacitor 16. The high-voltage battery 26 is also provided with a voltage sensor that detects voltage (inter-terminal voltage) VHB of the high-voltage battery 26. These voltage sensors are connected to the control unit 21 via signal transmission paths. The control unit 21 can recognize the output voltage VE of the inverter 15, the voltage VC of the capacitor 16, and the voltage VHB of the high-voltage battery 26 based on the detection signals output from these voltage sensors.

Although not illustrated, the engine 12 is provided with a rotation sensor that detects rotation speed of the engine 12, and this rotation sensor is connected to the control unit 21 via a signal transmission path. The control unit 21 can recognize the rotation speed of the engine 12 based on the detection signal output from the rotation sensor.

### Engine Start Process

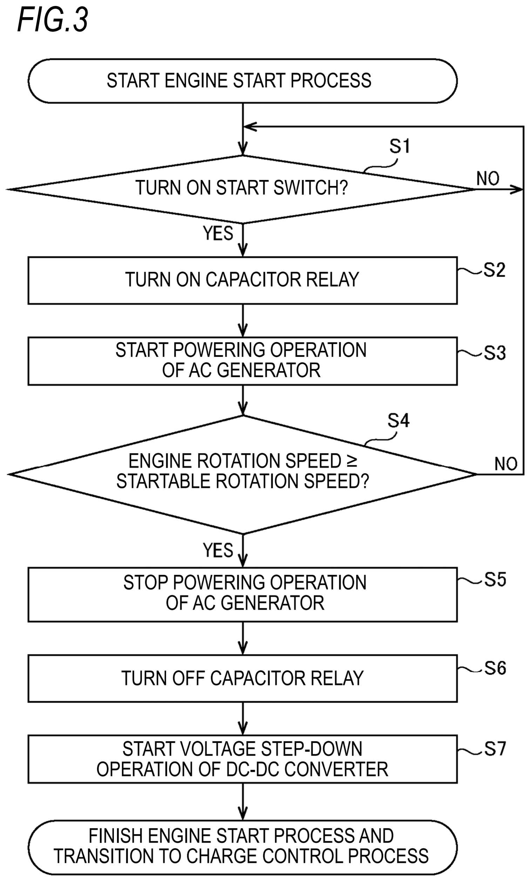

FIG. 3 illustrates the engine start process performed by the marine propulsion system 5. The engine start process is a process for starting the engine 12 that has been stopped. The engine start process will be described in detail.

For example, when starting to sail, the operator turns on the power of the marine propulsion system 5. When the power of the marine propulsion system 5 is turned on, electric power is supplied from the low-voltage battery 25 to the control unit 21 and the DC-DC converter 18, and the control unit 21 and the DC-DC converter 18 start up. However, when the power of the marine propulsion system 5 is simply turned on, the engine 12 and the inverter 15 are both stopped, and the capacitor relay 19 and the high-voltage battery relay 20 are both turned off. In this case, it is assumed that the capacitor 16 stores enough electric power to power the AC generator 14 and start the engine 12. After the control unit 21 is started, the control unit 21 starts the engine start process.

In the engine start process, the control unit 21 first monitors a state of the start switch 28 (step S1). When the operator presses the start switch 28, the control unit 21 recognizes that the start switch 28 has been pressed based on the detection signal output from the start switch 28 (step S1: YES).

Next, the control unit 21 turns on the capacitor relay 19 (step S2). As a result, DC power is supplied from the capacitor 16 to the inverter 15, and the inverter 15 becomes operable.

Next, the control unit 21 controls the inverter 15 to operate as a three-phase inverter, and starts powering the AC generator 14 (step S3). As a result, the crankshaft of the engine 12 begins to rotate due to the power of the AC generator 14. In this case, the control unit 21 also controls the electronically controlled throttle device, the fuel injection device, the ignition device, and the like, and starts the supply of combustion air, the injection of fuel, and the ignition of the air-fuel mixture.

Next, the control unit 21 determines whether the rotation speed of the engine 12 has reached or exceeded startable rotation speed within a predetermined first reference time (step S4). The startable rotation speed is a reference value of the rotation speed at which the engine 12 reaches initial combustion, and is set to, for example, 500 rpm.

When the rotation speed of the engine 12 does not reach or exceed the startable rotation speed within the first reference time (step S4: NO), the process returns to step S1.

On the other hand, when the rotation speed of the engine 12 reaches or exceeds the startable rotation speed within the first reference time (step S4: YES), the control unit 21 controls the inverter 15 to stop the powering of the AC generator 14 (step S5). Subsequently, the control unit 21 switches the operation of the inverter 15 to operate as a three-phase rectifier circuit. Next, the control unit 21 turns off the capacitor relay 19 (step S6), and then starts the voltage step-down operation of the DC-DC converter 18 (step S7).

When the engine 12 reaches initial combustion, that is, when the engine 12 starts, the rotation of the crankshaft of the engine 12 rotates the rotor of the AC generator 14, and the AC generator 14 generates electric power. The electric power generated by the AC generator 14 is converted from AC to DC by the inverter 15 which operates as a three-phase rectifier circuit, and is then output from the inverter 15. In this case, since both the capacitor relay 19 and the high-voltage battery relay 20 are turned off, the DC power output from the inverter 15 is only supplied to the low-voltage battery 25 via the DC-DC converter 18. More specifically, the DC voltage output from the inverter 15 is stepped down by the DC-DC converter 18 and applied to the low-voltage battery 25. This causes the low-voltage battery 25 to be charged.

### Charge Control Process

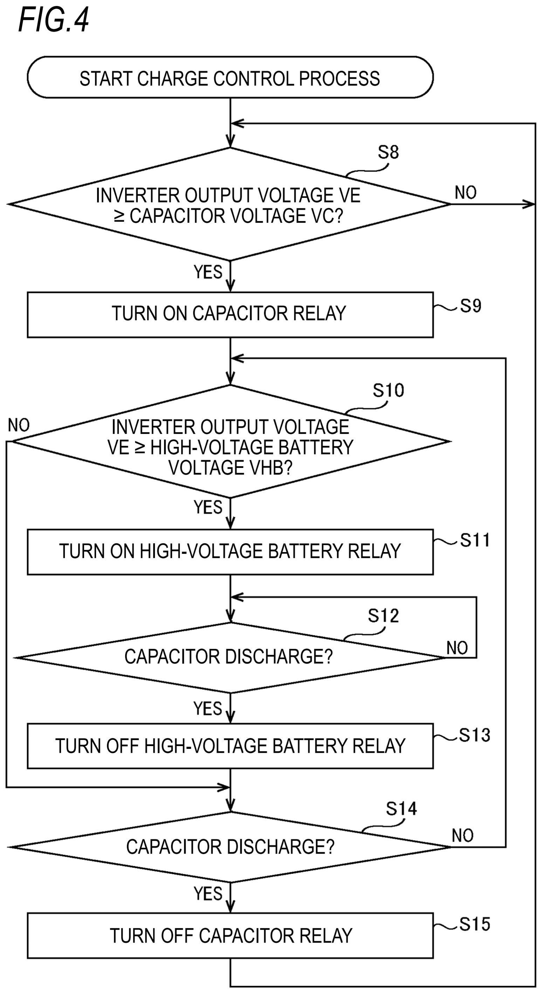

FIG. 4 illustrates a charge control process performed by the charge control device 7 in the marine propulsion system 5. The charge control process is a process for controlling the charging of the low-voltage battery 25, the capacitor 16, and the high-voltage battery 26 while the engine 12 is running and the AC generator 14 is generating electric power. The charge control process is started immediately after the engine start process is completed.

After the engine 12 starts, the AC generator 14 generates electric power. An amount of electric power generated by the AC generator 14 increases as the rotation speed of the engine 12 increases. A magnitude of the output voltage VE of the inverter 15 increases as the electric power generated by the AC generator 14 increases. In the charge control process, the control unit 21 first determines whether a state in which the output voltage VE of the inverter 15 is equal to or greater than the voltage VC of the capacitor 16 has continued for a predetermined second reference time (for example, 100 milliseconds) (step S8).

When the state in which the output voltage VE of the inverter 15 is equal to or greater than the voltage VC of the capacitor 16 does not continue for the second reference time (step S8: NO), both the capacitor relay 19 and the high-voltage battery relay 20 are maintained in an off state. In this case, the DC power output from the inverter 15 is simply supplied to the low-voltage battery 25 via the DC-DC converter 18, thereby charging the low-voltage battery 25.

On the other hand, when the state in which the output voltage VE of the inverter 15 is equal to or greater than the voltage VC of the capacitor 16 continues for the second reference time (step S8: YES), the control unit 21 turns on the capacitor relay 19 (step S9). As a result, the capacitor relay 19 is turned on and the high-voltage battery relay 20 is turned off. When the output voltage VE of the inverter 15 is equal to or greater than the voltage VC of the capacitor 16, if the capacitor relay 19 is turned on and the high-voltage battery relay 20 is turned off, the DC power output from the inverter 15 is supplied to the low-voltage battery 25 and the capacitor 16, respectively, and the low-voltage battery 25 and the capacitor 16 are respectively charged.

Next, the control unit 21 determines whether the state in which the output voltage VE of the inverter 15 is equal to or greater than the voltage VHB of the high-voltage battery 26 has continued for a predetermined third reference time (for example, 3 seconds) (step S10).

When the state in which the output voltage VE of the inverter 15 is equal to or greater than the voltage VHB of the high-voltage battery 26 continues for the third reference time (step S10: YES), the control unit 21 turns on the high-voltage battery relay 20 (step S11). As a result, the capacitor relay 19 and the high-voltage battery relay 20 are both turned on. When the output voltage VE of the inverter 15 is equal to or greater than the voltage VC of the capacitor 16 and equal to or greater than the voltage VHB of the high-voltage battery 26, if the capacitor relay 19 and the high-voltage battery relay 20 are both turned on, the DC power output from the inverter 15 is respectively supplied to the low-voltage battery 25, the capacitor 16, and the high-voltage battery 26, and the low-voltage battery 25, the capacitor 16, and the high-voltage battery 26 are respectively charged.

Next, the control unit 21 determines whether the state in which the capacitor 16 is discharging has continued for a predetermined fourth reference time (for example, 3 seconds) based on the detection signal output from the current sensor 17 (step S12).

When the state in which the capacitor 16 is discharging does not continue for the fourth reference time (step S12: NO), the capacitor relay 19 and the high-voltage battery relay 20 are maintained in the on state.

On the other hand, when the capacitor relay 19 and the high-voltage battery relay 20 are both on, the rotation speed of the engine 12 decreases, the electric power generated by the AC generator 14 decreases, and as a result, the output voltage VE of the inverter 15 decreases, and the capacitor 16 may discharge. When the state in which the capacitor 16 is discharged continues for the fourth reference time (step S12: YES), the control unit 21 turns off the high-voltage battery relay 20 (step S13). By turning off the high-voltage battery relay 20, a discharge rate of the capacitor 16 can be reduced, and the discharge of the capacitor 16 can be suppressed.

After the high-voltage battery relay 20 is turned off in step S13, or when in step S10 the state in which the output voltage VE of the inverter 15 is equal to or greater than the voltage VHB of the high-voltage battery 26 does not continue for the third reference time (step S10: NO), the control unit 21 determines, based on the detection signal output from the current sensor 17, whether the state in which the capacitor 16 is discharged has continued for a predetermined fifth reference time (for example, 100 milliseconds) (step S14).

When the state in which the capacitor 16 is discharged does not continue for the fifth reference time (step S14: NO), the process returns to step S10.

On the other hand, when the capacitor relay 19 is turned on and the high-voltage battery relay 20 is turned off, the rotation speed of the engine 12 decreases, the electric power generated by the AC generator 14 decreases, and as a result, when the output voltage VE of the inverter 15 decreases, the capacitor 16 may discharge. When the state in which the capacitor 16 is discharged continues for the fifth reference time (step S14: YES), the control unit 21 turns off the capacitor relay 19 (step S15). By turning off the capacitor relay 19, the discharge of the capacitor 16 can be stopped. Thereafter, the process returns to step S8.

### Engine Stop Process

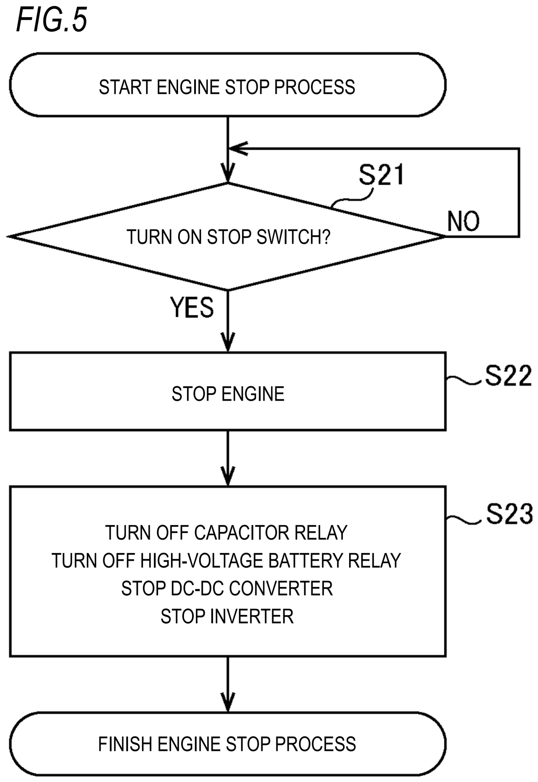

FIG. 5 illustrates an engine stop process performed by the marine propulsion system 5. The engine stop process is a process for stopping the engine 12 that is running. The engine stop process is performed while the engine 12 is running. Furthermore, the engine stop process is performed in parallel with or in parallel to the charge control process.

In the engine stop process, the control unit 21 first monitors the state of the stop switch 29 (step S21). When the operator presses the stop switch 29, the control unit 21 recognizes that the stop switch 29 has been pressed based on the detection signal output from the stop switch 29 (step S21: YES). Next, the control unit 21 stops the engine 12 (step S22). Next, the control unit 21 turns off the capacitor relay 19 if the capacitor relay 19 is on, and turns off the high-voltage battery relay 20 if the high-voltage battery relay 20 is on. Furthermore, the control unit 21 stops the DC-DC converter 18 and the inverter 15 (step S23). By turning off the capacitor relay 19 during the engine stop process, it is possible to prevent the capacitor 16 from discharging while the engine 12 is stopped. When the engine 12 stops, the charge control process ends.

As described above, the charge control device 7 of the example of the present invention in the marine propulsion system 5 connects the inverter 15 and the capacitor 16 by controlling the capacitor relay 19 when the output voltage VE of the inverter 15 is greater than the voltage VC of the capacitor 16 during power generating operation of the AC generator 14. In addition, when the inverter 15 and the capacitor 16 are connected and the capacitor 16 is discharged during the power generating operation of the AC generator 14, the charge control device 7 controls the capacitor relay 19 to disconnect the inverter 15 and the capacitor 16. These configurations make it possible to suppress discharge of the capacitor 16 due to fluctuations in the electric power generated by the AC generator 14 during the power generating operation of the AC generator 14.

Furthermore, when the output voltage VE of the inverter 15 is greater than the voltage VHB of the high-voltage battery 26 during the power generating operation of the AC generator 14, the charge control device 7 of this example controls the high-voltage battery relay 20 to connect the inverter 15 and the high-voltage battery 26. Furthermore, during the power generating operation of the AC generator 14, when the inverter 15 and the capacitor 16 and the inverter 15 and the high-voltage battery 26 are connected to each other and the capacitor 16 is discharging, the charge control device 7 controls the high-voltage battery relay 20 to disconnect the inverter 15 from the high-voltage battery 26. These configurations also make it possible to suppress the discharge of the capacitor 16 due to fluctuations in the electric power generated by the AC generator 14 during the power generating operation of the AC generator 14.

In this way, according to the charge control device 7 of this example, it is possible to suppress the discharge of the capacitor 16 due to fluctuations in the electric power generated by the AC generator 14 during the power generating operation of the AC generator 14, thereby improving a charging efficiency of the capacitor 16 during the power generating operation of the AC generator 14. Furthermore, it is possible to prevent the capacitor 16 (lithium ion capacitor) from being damaged due to over-discharge of the capacitor 16.

The charge control device 7 of this example also includes the current sensor 17 that detects the discharge of the capacitor 16. This makes it possible to easily and reliably detect the discharge of the capacitor 16 when the capacitor relay 19 is in the on state. That is, as can be seen from FIG. 2, in the electrical circuit of the charge control device 7, on the output side of the inverter 15 when the inverter 15 is operating as a three-phase rectifier circuit, a negative terminal of the inverter 15 is connected to a negative terminal of the capacitor 16, and a positive terminal of the inverter 15 is connected to a positive terminal of the capacitor 16 via the capacitor relay 19. In such a circuit configuration, when the capacitor relay 19 is off, the output voltage VE of the inverter 15 is detected by a voltage sensor that detects the output voltage VE of the inverter 15, and the voltage VC of the capacitor 16 is detected by a voltage sensor that detects the voltage VC of the capacitor 16. The output voltage VE of the inverter 15 and the voltage VC of the capacitor 16 can be compared to detect a difference between them. However, when the capacitor relay 19 is on, the voltage detected by the voltage sensor that detects the output voltage VE of the inverter 15 and the voltage detected by the voltage sensor that detects the voltage VC of the capacitor 16 become equal to each other. Therefore, it is difficult to detect whether the capacitor 16 is discharging based on the output voltage VE of the inverter 15 and the voltage VC of the capacitor 16. However, in the charge control device 7 of this example, the discharge of the capacitor 16 is detected by the current sensor 17, so that the discharge of the capacitor 16 can be easily and reliably detected when the capacitor relay 19 is on.

In addition, in the charge control device 7 of this example, the low-voltage battery 25, the capacitor 16, and the high-voltage battery 26 are charged with electric power generated by the AC generator 14 using the power of the engine 12. When the only power storage device that is charged with electric power generated by the AC generator 14 using the power of the engine 12 is the low-voltage battery 25, only a small portion of the electrical energy generated by the AC generator 14 can be effectively utilized. In contrast, in the charge control device 7 of this example, the power storage devices that are charged with the electric power generated by the AC generator 14 using the power of the engine 12 are the low-voltage battery 25, the capacitor 16, and the high-voltage battery 26, so that the portion of the electric power generated by the AC generator 14 that can be effectively utilized can be increased, and a utilization efficiency of the electric power generated by the AC generator 14 can be improved. Furthermore, according to the charge control device 7 of this example, the fuel injection device, electronically controlled throttle device, ignition device, control unit 21, and the like can be driven by the electric power stored in the low-voltage battery 25, the AC generator 14 can be powered by the electric power stored in the capacitor 16, and other electrical equipment installed on the boat can be driven by the electric power stored in the high-voltage battery 26. For example, when the boat has a cabin in which an air conditioner, refrigerator, and the like are installed, the air conditioner, refrigerator, and the like can be driven by the electric power stored in the high-voltage battery 26. In this way, the charge control device 7 of this example can cover the electric power consumed by a large number of devices or equipment installed on the boat.

In the above example, a lithium ion capacitor is used as the capacitor, but the present invention is not limited to this, and other capacitors such as an electric double layer capacitor can also be used as the capacitor.

Furthermore, in the above example, the present invention is applied to a marine propulsion system, but the present invention can also be applied to, for example, a vehicle driving system for driving an automobile.

Furthermore, the present invention can be modified as appropriate within the scope that does not contradict the gist or idea of the invention that can be read from the claims and the entire specification, and charge control devices involving such modifications are also included in the technical idea of the present invention.

### REFERENCE SIGNS LIST

7: charge control device
14: AC generator (AC generator)
15: inverter (rectifier)
16: capacitor
17: current sensor
18: DC-DC converter
19: capacitor relay (first switch)
20: high-voltage battery relay (second switch)
21: control unit (control unit)
25: low-voltage battery (first battery)
26: high-voltage battery (second battery)

## Claims

1. A charge control device (7) comprising:
an AC generator (14);
a rectifier (15) configured to convert electric power generated by the AC generator from AC to DC;
a first battery (25) connected to the rectifier and configured to being charged by the electric power supplied from the rectifier;
a capacitor (16) connected in parallel with the first battery to the rectifier and configured to being charged by the electric power supplied from the rectifier;
a DC-DC converter (18) configured to convert voltage output from the rectifier from DC to DC and configured to apply the converted voltage to the first battery;
a first switch (19) configured to switch between connection and disconnection between the rectifier and the capacitor; and
a control unit (21) configured to: connect the rectifier and the capacitor by controlling the first switch when output voltage of the rectifier is greater than voltage of the capacitor during a power generating operation of the AC generator; and disconnect the rectifier and the capacitor by controlling the first switch when the rectifier and the capacitor are connected and the capacitor is discharging during a power generating operation of the AC generator.

2. The charge control device according to claim 1, further comprising:
a second battery connected in parallel with the first battery and the capacitor to the rectifier and configured to being charged by the electric power supplied from the rectifier; and
a second switch configured to switch between connection and disconnection between the rectifier and the second battery,
wherein when output voltage of the rectifier is greater than voltage of the second battery during a power generating operation of the AC generator, the control unit connects the rectifier to the second battery by controlling the second switch, and when the rectifier is connected to the capacitor and the rectifier is connected to the second battery during a power generating operation of the AC generator and the capacitor is discharging, the control unit disconnects the rectifier from the second battery by controlling the second switch.

3. The charge control device according to claim 1, further comprising a current sensor configured to detect discharge of the capacitor.
